# EUROPEAN PATENT APPLICATION

(11) **EP 4 040 829 A1**
(43) Date of publication of application: **10.08.2022**
(21) Application number: 19947751.4
(22) Date of filing: 30.09.2019
(51) Int. Cl.: H04W 16/14, H04W 72/04, H04W 48/16, H04W 74/04

(54) **TERMINAL AND RECEPTION METHOD**

(71) Applicant: NTT DOCOMO, INC., Chiyoda-Ku Tokyo 100-6150 (JP)
(72) Inventor: HARADA, Hiroki, Tokyo 100-6150 (JP); KUMAGAI, Shinya, Tokyo 100-6150 (JP); KURITA, Daisuke, Tokyo 100-6150 (JP); NAGATA, Satoshi, Tokyo 100-6150 (JP)
(74) Representative: Hoffmann Eitle
(86) International application number: PCT/JP2019/038652
(87) International publication number: WO 2021/064839

(57) **Abstract**

A terminal including: a reception unit configured to receive a plurality of pieces of control information indicating a channel occupancy structure of a frequency domain within a channel occupancy time; and a control unit configured to determine that the channel occupancy structure of the frequency domain indicated by each of the plurality of pieces of control information is the same.

## Description

### [Technical Field]

The present invention relates to terminals in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being considered.

In addition, existing LTE systems support the use of frequency bands different from licensed bands licensed to telecom carriers (i.e., unlicensed bands, unlicensed carriers, and unlicensed CC) in order to expand the frequency bands. As the unlicensed bands, 2.4 GHz band, 5 GHz band, or 6 GHz band where Wi-Fi (registered trademark) or Bluetooth (registered trademark) can be used is assumed.

Specifically, Rel.13 supports Carrier Aggregation (CA), which integrates the carrier (CC) of the licensed band and the carrier (CC) of the unlicensed band. Thus, communication with the license band using the unlicensed band is called License-Assisted Access (LAA).

In a wireless communication system that communicates using an unlicensed band with a licensed band, in a downlink, the base station apparatus performs channel sensing (carrier sensing) to verify whether other devices (e.g., base station apparatus, user terminal, Wi-Fi device, etc.) have been transmitted prior to transmitting data in the unlicensed band. Once the sensing results confirm that there is no transmission of other devices, the transmission can be performed for a predetermined period of time with an opportunity to transmit. This operation is called the Listen Before Talk. The predetermined period is also referred to as the Channel Occupancy Time (COT).

If the user terminal receives information from the base station apparatus whether or not the slot in which UL transmission is to be performed is within the COT, the user terminal can perform UL transmission without an LBT or an LBT for a short time, for example, within the COT. The user terminal can also change the PDCCH monitoring operation inside and outside the COT.

The NR-U system is assumed to operate in a bandwidth greater than 20 MHz (e.g., 100 MHz) (called wide band operation or broadband operation).

### [Prior Art Documents]

### [Non-Patent Documents]

[Non-Patent Document 1] 3GPP TS 38.331 V15.6.0 (2019-06)
[Non-Patent Document 2] 3GPP TS 38.213 V15.6.0 (2019-06)
[Non-Patent Document 3] 3GPP TS 38.212 V15.6.0 (2019-06)

### [Summary of Invention]

### [Problem to be Solved by the Invention]

In wideband operation, it is assumed that the base station apparatus performs the LBT at each of the multiple subbands (e.g., 20 MHz) that comprise the wide bandwidth. The subband may also be referred to as the LBT bandwidth or the LBT sub-band.

For example, the user terminal may receive information indicating whether or not the LBT was successful for each sub-band from the base station apparatus so that only one or more sub-bands that succeeded in the LBT can monitor the PDCCH. However, in the prior art, there is a problem that the user terminal may not be able to receive information indicating whether or not the LBT was successful for each sub-band from the base station apparatus appropriately. Failure to receive information appropriately, for example, may result in an unclear interpretation of the information.

The information indicating whether the LBT was successful or not for each sub-band may be referred to as the CO (channel occupancy) frequency domain structure, the CO frequency domain structure, the CO structure in the frequency domain, etc.

The present invention has been made in view of the foregoing, and is intended to provide a technique that enables a user terminal to receive a CO frequency domain structure appropriately from a base station apparatus.

### [Means for Solving Problems]

According to the disclosed technique, there is provided a terminal including:
a reception unit configured to receive a plurality of pieces of control information indicating a channel occupancy structure of a frequency domain within a channel occupancy time; and
a control unit configured to determine that the channel occupancy structure of the frequency domain indicated by each of the plurality of pieces of control information is the same. [Effects of the Invention]

According to the disclosed technique, a technique is provided which allows the user terminal to receive the CO frequency domain structure appropriately from the base station apparatus.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram for explaining a basic operation in a wireless communication system;
Fig. 4 is a diagram showing SlotFormatCombinationsPerCell;
Fig. 5 is a diagram showing an example of a method of notifying a COT termination timing;
Fig. 6 is a diagram for explaining Example 1-1;
Fig. 7 is a diagram for explaining Example 1-2;
Fig. 8 is a diagram for explaining Example 1;
Fig. 9 is a diagram for explaining Example 2-1;
Fig. 10 is a diagram for explaining Example 2-2;
Fig. 11 is a diagram for explaining Example 2-3;
Fig. 12 is a diagram for explaining Example 3-1 to 6-1;
Fig. 13 is a diagram for explaining Example 3-2 to 6-2;
Fig. 14 is a diagram for explaining Example 3-3 to 6-3;
Fig. 15 is a diagram for explaining Example 5;
Fig. 16 is a diagram for explaining FBE and LBE;
Fig. 17 is a diagram for explaining Example 8;
Fig. 18 is a diagram for explaining Example 9;
Fig. 19 is a diagram for explaining Example 10-1;
Fig. 20 is a diagram for explaining Example 10-2;
Fig. 21 is a diagram for explaining Example 10-3;
Fig. 22 shows an example of a functional configuration of the base station apparatus 10 according to an embodiment of the present invention;
Fig. 23 shows an example of a functional configuration of a user terminal 20 according to an embodiment of the present invention;
Fig. 24 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The present invention is applicable not only to NR but also to any wireless communication system.

In embodiments of the present invention, the duplex method may be a TDD (Time Division Duplex) method, a FDD (Frequency Division Duplex) method, or any other method (e.g., Flexible Duplex, etc.).

In an embodiment of the present invention, the wireless parameter or the like being "configured" may mean that a predetermined value is preconfigured or a wireless parameter notified from the base station apparatus 10 or the user terminal 20 is configured.

### (System Configuration)

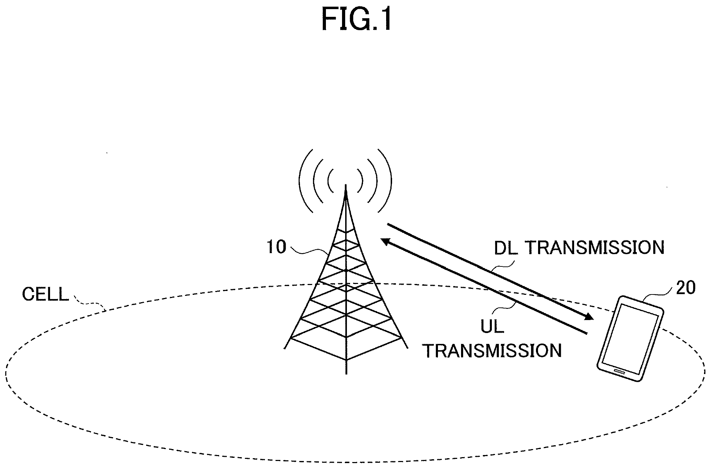

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and more than one base station apparatuses and more than one user terminals may be provided. The user terminal 20 may be referred to as a "terminal." The wireless communication system according to this embodiment may be referred to as an NR-U system.

The base station apparatus 10 is a communication device that provides one or more cells and performs wireless communication with the user terminal 20. The physical resources of the radio signal are defined in the time domain and the frequency domain, the time domain may be defined in slots or OFDM symbols, and the frequency domain may be defined in subbands, subcarriers or resource blocks.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a CA (Carrier Aggregation) via a SCell (Secondary Cell) and a PC (Primary Cell) .

The user terminal 20 is a communication device having a wireless communication function such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

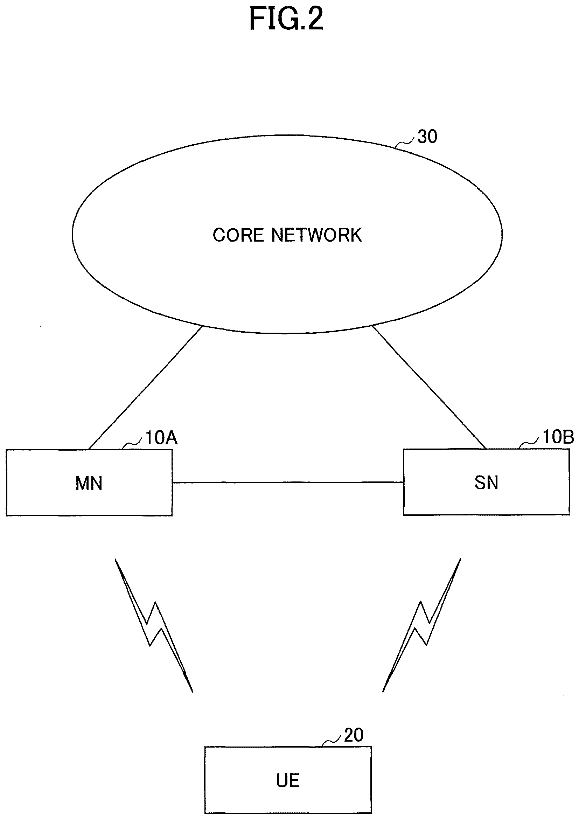

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called the MCG (Master Cell Group), and the cell group provided by the base station apparatus 10B that is an SN is called the SCG (Secondary Cell Group). The operations described later in Examples 1 to 10 may be performed in any of the configurations of Figs. 1 and 2.

In the wireless communication system according to the present embodiment, the LBT described above is executed. The base station apparatus 10 or the user terminal 20 acquires the CO when the LBT result is idle, performs transmission, and does not perform transmission when the LBT result is busy (LBT-busy).

The wireless communication system according to this embodiment may perform a carrier aggregation (CA) operation using an unlicensed CC and a licensed CC, a dual connectivity (DC) operation using an unlicensed CC and a licensed CC, or a stand-alone (SA) operation using an unlicensed CC alone. CA, DC, or SA may be performed by any one system of NR and LTE. DC may be performed by at least two of NR, LTE, and other systems.

The user terminal 20 may assume the presence of a signal (such as a reference signal (RS) (e.g., Demodulation Reference Signal (DMRS))) in a PDCCH or group common PDCCH (group common (GC)-PDCH) to detect a transmitting burst from the base station apparatus 10.

The base station apparatus 10 may transmit a specific PDCH (PDCH or GC-PDCH) containing a specific DMRS notifying the CO start at the start of CO of the base station apparatus initiation. At least one of a specific PDCCH and a specific DMRS may be referred to as a CO start notification signal. For example, the base station apparatus 10 transmits the CO start notification signal to one or more user terminals 20, and the user terminal 20 can recognize the CO when a specific DMRS is detected.

### (Basic Operation Example)

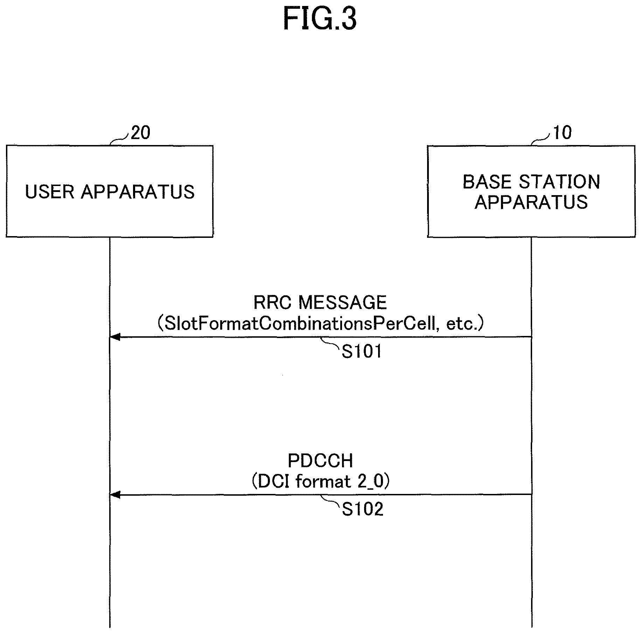

Fig. 3 shows a basic operation example of a wireless communication system according to the present embodiment. The operation shown in Fig. 3 is basically performed in Examples 1 to 10, which will be described later.

As shown in Fig. 3, in S101, the base station apparatus 10 transmits an RRC message to the user terminal 20, and the user terminal 20 receives the RRC message. This RRC message contains the SlotFormatCombinationsPerCell information element for each serving cell. In S101, the base station apparatus 10 may notify the user terminal 20 of an RNTI value (called SFI-RNTI) for monitoring DCI format 2_0.

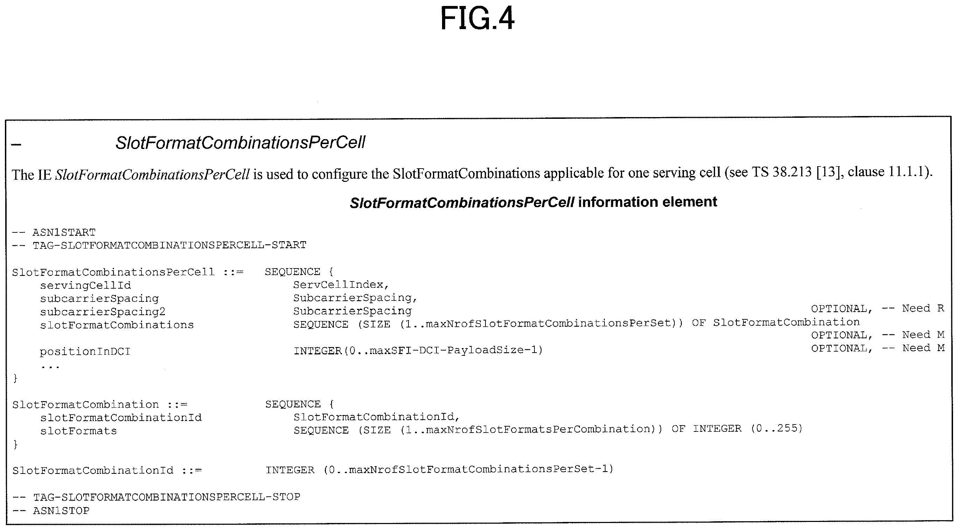

FIG. 4 shows SlotFormatCombinationsPerCell described in Non-Patent Document 1. In this embodiment, SlotFormatCombinationsPerCell described in Non-Patent Document 1 may be used, or SlotFormatCombinationsPerCell modified from SlotFormatCombinationsPerCell described in Non-Patent Document 1 may be used.

One SlotFormatCombinationsPerCell contains one or more SlotFormatCombinations and a bit position (positInDCI) in DCI Format 2_0 of the SlotFormatCombinationID for a serving cell configured in the user terminal 20.

One SlotFormatCombination contains the SlotFormatCombinationID and slotFormats. SlotFormats is the information in Non-Patent Document 2 in which the format numbers (any number from 0 to 255) described in Table 11.1.1-1 are arranged by the number of slots. The format number may also be referred to as a format index. The number of slots may be a value corresponding to a period during which the user terminal 20 monitors the DCI format 2_0.

In this embodiment, Table 11.1.1-1 in Non-Patent Document 2 may be used as is, or a modified table may be used.

In S101, the user terminal 20 receives SlotFormatCombinationsPerCell for each serving cell and acquires the corresponding information of the SlotFormatCombinationID and the slot format for each serving cell. The acquired corresponding information is stored in a storage device, such as a memory, of the user terminal 20.

In S102 of Fig. 3, the base station apparatus 10 transmits a DCI format 2_0 to the user terminal 20 by a PDCCH (which may be a GC-PDCCH), and the user terminal 20 receives the DCI format 2_0.

The DCI Format 2_0 described in Non-Patent Document 2 and Non-Patent Document 3 may be used as the DCI Format 2_0 in this embodiment, or the DCI Format 2_0 modified from the DCI Format 2_0 described in Non-Patent Document 2 and Non-Patent Document 3 may be used.

The DCI Format 2_0 stores a SlotFormatCombinationID (also called SFI-index) for the relevant serving cell in the bit position notified in the RRC message for each serving cell. In Example 10, the CO frequency domain structure is indicated by the DCI format 2_0.

The user terminal 20 reads slotFormatCombinationID at a bit position corresponding to a serving cell to determine slotFormats in the serving cell. In the following description, if no reference is made to a serving cell, it may be assumed that it is an operation in a serving cell.

For example, suppose that the user terminal 20 receives the DCI format 2_0 at the head portion of the slot 1 and reads the SlotFormatCombinationID = 2. If the user terminal 20 recognizes that the SlotFormatCombinationID=2 is {0, 1, 0, 1}, based on the setting in the RRC, the user terminal 20 can recognize that the format of the slot 1 is format 0, the format of the slot 2 is format 1, the format of the slot 3 is format 0, and the format of the slot 4 is format 1.

According to the present embodiment, by using the DCI format 2_0, the base station apparatus 10 notifies the user terminal 20 whether or not a slot is within a COT in the time domain. Whether or not the slot is within the COT may be referred to as a CO time domain structure . Further, by using the DCI format 2_0, the base station apparatus 10 notifies the user terminal 20 of the CO frequency domain structure.

Note herein that the term "notification" may be replaced with "indication". The English language corresponding to "Notify" may also be "indicate".

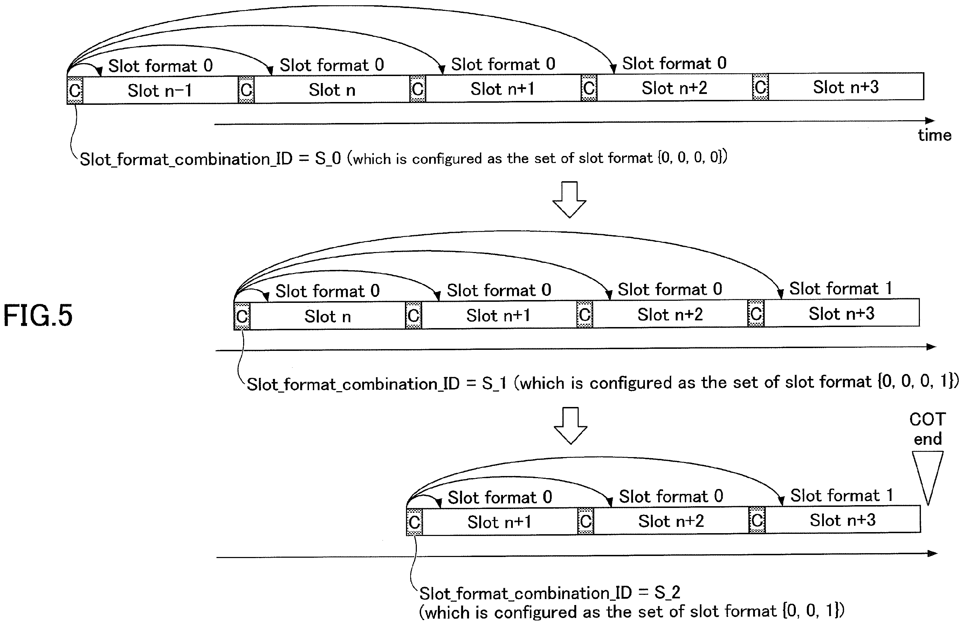

FIG. 5 illustrates an example of a method for notifying whether a slot is within the COT. In the example shown in Fig. 5, the termination timing of the COT is notified by the change in the length (number of slots) of the slotFormats indicated by the SlotFormatCombinationID notified by DCI Format 2_0.

Specifically, as shown in Fig. 5, the length of slotFormats indicated by the SlotFormatCombinationID initially notified by the DCI Format 2_0 is 4, whereas the length of slotFormats indicated by the SlotFormatCombinationID notified by the third DCI Format 2_0 is 3. The user terminal 20 recognizes that the length of slotFormats has changed from 4 to 3, and determines that the last slot in slotFormatCombinationID indicated by SlotFormats notified by the third DCI Format 2_0 is the completion of the COT.

Hereinafter, examples 1 to 9 will be described as a technique for allowing the user terminal 20 to more appropriately receive dynamic information on whether or not the slot is within the COT from the base station apparatus 10. Example 10 will also be described as an example that can be combined with both the technique of Fig. 5 and Examples 1 to 9. Example 10 is an example of a technique allowing the user terminal 20 to receive the CO frequency domain structure appropriately from the base station apparatus 10. Since Examples 1 to 9 can be implemented in combination with Example 10, Examples 1 to 9 all correspond to Examples of the present invention.

Any Examples of the Examples 1 to 10 may be implemented in combination, provided there is no contradiction.

### (Example 1)

First, Example 1 will be described. Example 1 notifies that a slot is outside the COT by using a specified format number in Table 11.1.1-1 (or a modification thereof) of Non-Patent Document 2. Hereinafter, Examples 1-1 and 1-2 will be described as concrete examples.

### <Example 1-1>

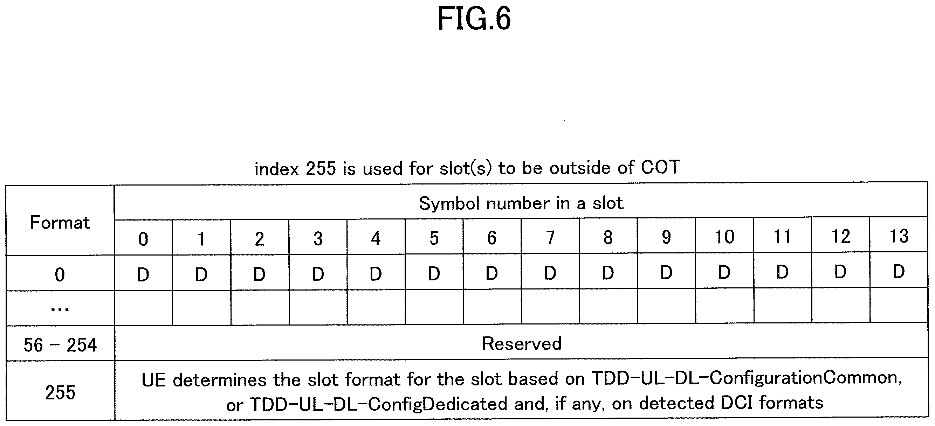

As a specific format number, 255 is used, for example, as shown in Figure 6 (Extract from Table 11.1.1-1).

### <Examples 1-2>

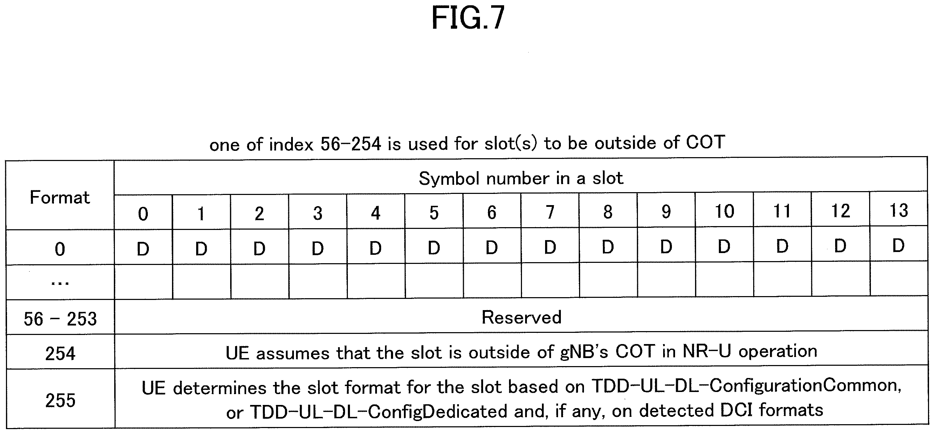

As a specific format number, one of the numbers 56-254 (reserved number) shown in Figure 7 (modified from the extract from Table 11.1.1-1) is used. Figure 7 illustrates, by way of example, the use of 254.

### <Operation common to Examples 1-1 and 1-2>

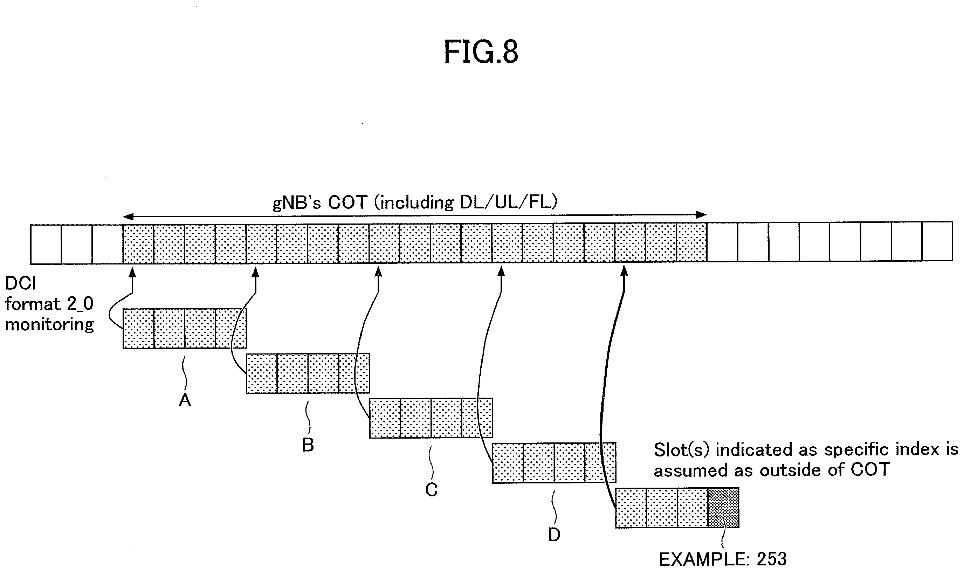

The common operation of Examples 1-1 and 1-2 will be described with reference to Figs. 3 and 8. Here, 253 is used as a specific format number. The same behavior applies to other specific format numbers.

In S101 of FIG. 3, slotFormatCombinations including slotFormats having the format number = 253 (where slotFormatCombinationID = 2) is configured to the user terminal 20.

In the S102 of Fig. 3, for example, the user terminal 20 receives the DCI Format 2_0 (which specifies other than slotFormatCombinationID = 2) four times shown in Fig. 8 by A to D, and then receives the DCI Format 2_0 specifying slotFormatCombinationID = 2.

The slotFormats of the slotFormatCombinationID = 2 is, for example, {0, 0, 0, 253}. Accordingly, the user terminal 20 determines that the last of the four slots is outside the COT. The user terminal 20 may determine that the slot of the format number other than the specified format number is within the COT in the slotFormats specified by the DCI format 2_0.

### <Example of in-COT and out-of-COT operation>

Here, an operation in the COT and an operation outside the COT in the user terminal 20 will be described as common operations in Examples 1 to 10.

For example, when the user terminal 20 determines that a slot is within the COT, it performs normal PDCCH monitoring in the slot, and when it determines that a slot is outside the COT, it performs PDCCH monitoring at a higher frequency in the slot than in the normal case. Outside the COT, PDCCH transmission may occur in the middle of the slot. Therefore, monitoring of PDCCH should be performed frequently to grasp this.

As a specific method of switching the PDCCH monitoring operation, for example, a plurality of different search space configurations are set to the user terminal 20 in the RRC in advance, and the user terminal 20 determines whether or not the COT is inside or outside the DCI format 2_0 and turns each configuration on/off (activation/deactivate) whether it is inside or outside the COT.

For example, the user terminal 20 performs two-step PDCCH decoding (PDCCH blind decoding after recognizing the presence of PDCCH transmission in DMRS) in slots outside the COT and performs only PDCCH blind decoding in the COT.

For example, the user terminal 20 that performs UL transmission performs a short-term LBT within the COT and performs a category 4 LBT outside the COT.

According to the Example 1, the user terminal 20 can determine whether or not the slot is out of COT with little change to the specification.

### (Example 2)

Next, Example 2 will be described. When transmitting DCI format 2_0, the base station apparatus 10 adds a CRC (Cyclic Redundancy Check) to the DCI format 2_0 and masks (scrambles) the CRC with RNTI.

The user terminal 20 detects (decodes) the DCI format 2_0 by performing a test with the CRC unmasked by the RNTI. Example 2 notifies whether the slot in slotFormats indicated by DCI format 2_0 is at the end of the COT by RNTI differences.

More specifically, the user terminal 20 determines that the slot of slotFormats indicated by the DCI format 2_0 decoded by a normal RNTI (e.g., the SFI-RNTI notified by the SlotFormatIndicator described in Non-Patent Document 1) is within the COT of the base station apparatus 10.

The user terminal 20 determines that the slot is the end of the COT based on the DCI format 2_0 decoded by a different RNTI (here, referred to as the new RNTI) than the normal RNTI.

Similar to the SFI-RNTI, the new RNTI may be configured from the base station apparatus 10 to the user terminal 20 by an RRC message (e.g., SlotFormatIndicator), or may be configured from the base station apparatus 10 to the user terminal 20 by a signal other than the RRC message (e.g., MAC CE), or may be specified as being fixed in advance in the specification.

Examples of the method in which the user terminal 20 determines the slot at the end of the COT include the following Examples 2-1, 2-2, and 2-3.

### <Example 2-1>

In Example 2-1, when the user terminal 20 detects the DCI FORMAT 2_0 with the CRC scrambled by the new RNTI, the user terminal determines that the last slot of the slotFormats specified by the DCI Format 2_0 is the end of the COT.

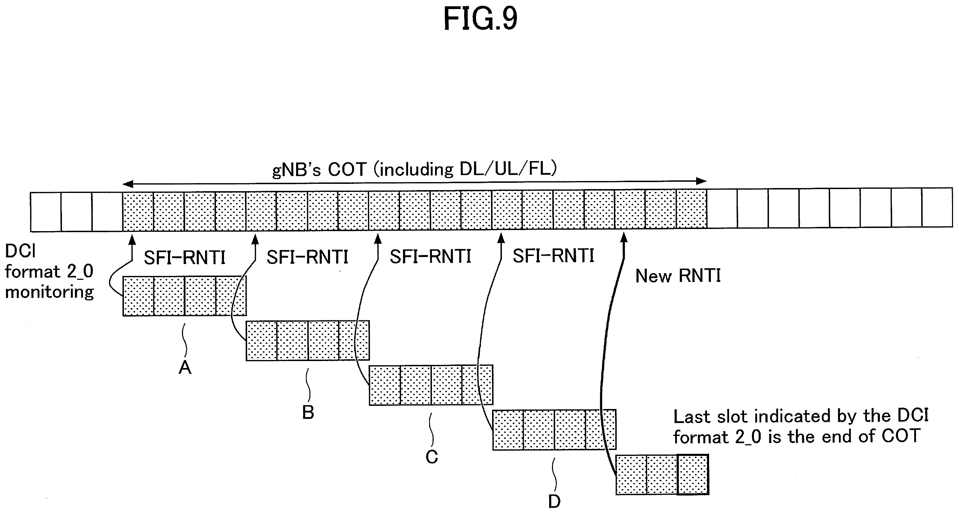

A specific example will be described with reference to Figs. 3 and 9. In S101 of Fig. 3, the slotFormatCombinations is configured to the user terminal 20, and the SFI-RNTI and the new RNTI are configured.

In S102 of Fig. 3, for example, the user terminal 20 detects four DCI Formats 2_0 (successfully decoded with SFI-RNTI) shown in A to D in Fig. 9. The user terminal 20 determines that each slot of slotFormats specified in the four DCI formats 2_0 is within the COT.

After the four DCI Formats 2_0, the user terminal 20 detects DCI Format 2_0 using the new RNTI. The slotFormats of the DCI format 2_0 is for example {0, 1, 1}, and the user terminal 20 determines that the last slot (third) is the last slot of the COT.

### <Example 2-2>

In Example 2-2, when the user terminal 20 detects the DCI Format 2_0 with the CRC scrambled with the new RNTI, the user terminal 20 determines that the last slot of the slotFormats specified in the last DCI Format 2_0 (detected by the SFI-RNTI) before the DCI Format 2_0 is the end of the COT.

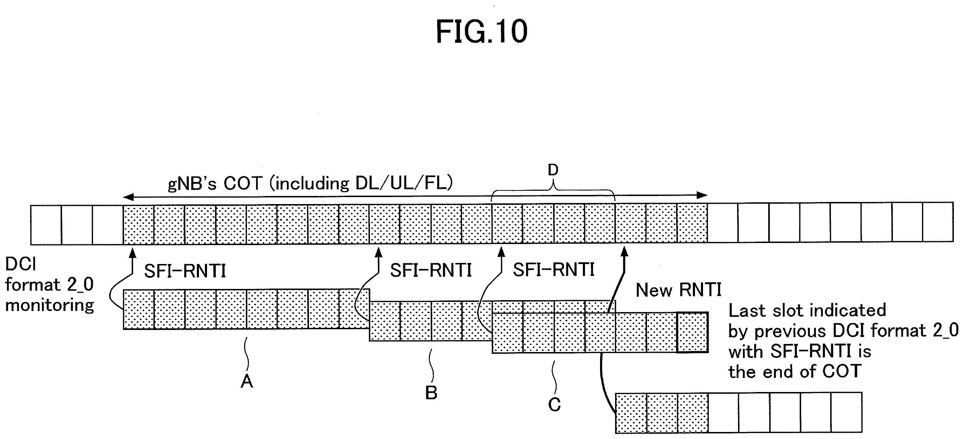

Referring to Fig. 10, a specific example showing a difference from Example 2-1 will be described. The user terminal 20 detects three DCI formats 2_0 (successfully decoded by the SFI-RNTI) represented by A to C of FIG. 10. The user terminal 20 determines that each slot of slotFormats specified in the three DCI formats 2_0 is within the COT.

After three times of DCI Format 2_0, when the user terminal 20 detects DCI Format 2_0 by the new RNTI, it determines that the last slot in slotFormats specified in the last DCI Format 2_0 before the DCI Format 2_0 is the end of the COT.

### <Example 2-3>

Example 2-3 correspond to the combination of Examples 1 and 2. In Example 2-3, when the user terminal 20 detects the DCI Format 2_0 having the CRC scrambled with the new RNTI, if the format number in the last slot of slotFormats specified in the DCI Format 2_0 is the specific slot number described in Example 1, the user terminal 20 determines that the last slot is out of COT.

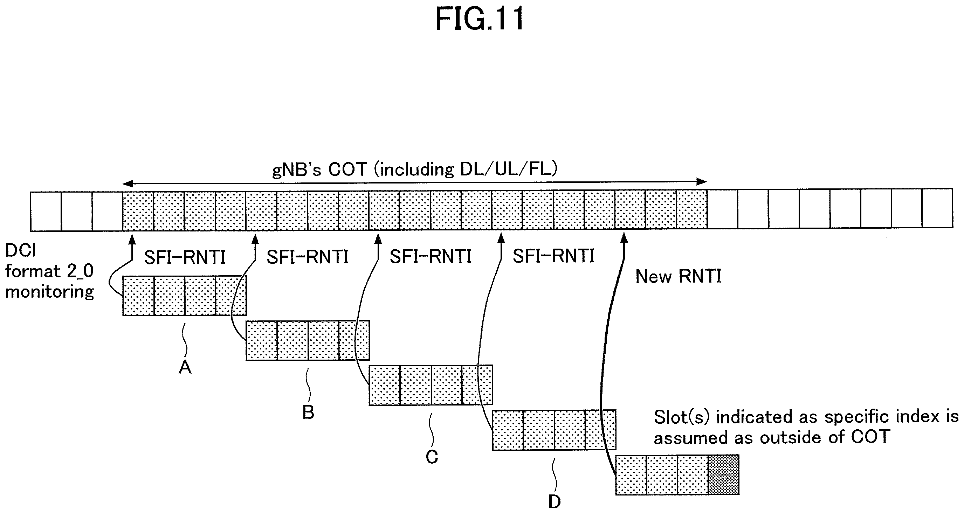

Referring to Fig. 11, a specific example showing a difference from Example 2-1 will be described. The user terminal 20 detects four DCI formats 2_0 (successfully decoded by the SFI-RNTI) shown in A to D of Fig. 11. The user terminal 20 determines that each slot of slotFormats specified in the four DCI formats 2_0 is within the COT.

After the four times of DCI Format 2_0, the user terminal 20 detects DCI Format 2_0 using the new RNTI to determine whether the format number of the last slot of the DCI Format 2_0 is a specific format number. If the format number of the last slot of the DCI Format 2_0 is a specific format number, the user terminal 20 determines that the last slot is out of the COT.

According to the Example 2, the user terminal 20 can appropriately determine inside/outside of the COT with few changes to the specification. This effect is similar for Examples 3 to 6.

### (Example 3)

Next, Example 3 will be described. The base station apparatus 10 maps and transmits DCI format 2_0 to a number of CCEs corresponding to an aggregation level. The user terminal 20 can decode the DCI format 2_0 by performing a decoding process assuming the aggregation level.

The base station apparatus 10 maps the DCI format 2_0 to a certain search space (resource area to be monitored, period, etc.) , and transmits the same. The user terminal 20 can decode the DCI format 2_0 by decoding the resources in the search space.

In Example 3, the base station apparatus 10 notifies whether a slot in slotFormats indicated by DCI format 2_0 is the end of COT by differences in the aggregation level or search space (aggregation level / search space).

More specifically, the user terminal 20 determines that the slot of slotFormats indicated by the DCI format 2_0 decoded with an aggregation level/search space (called a normal aggregation level/search space) other than a specific aggregation level/search space is within the COT of the base station apparatus 10.

The user terminal 20 determines that the slot is the end of the COT based on the DCI format 2_0 decoded with a specific aggregation level/search space.

The specific aggregation level/search space may be configured from the base station apparatus 10 to the user terminal 20 in an RRC message, or it may be configured from the base station apparatus 10 to the user terminal 20 in a signal other than an RRC message (e.g., MAC CE), or it may be specified as fixed in advance in a specification.

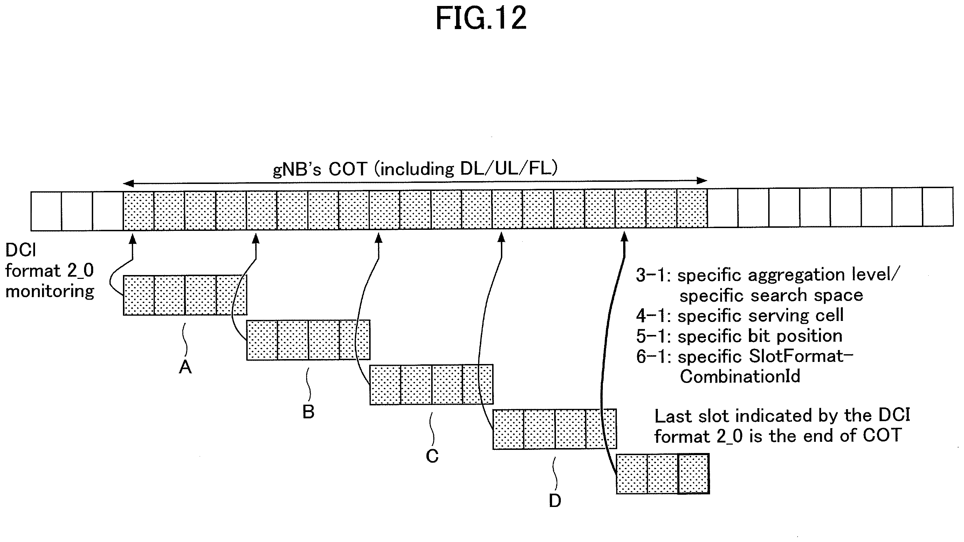

Examples of the method in which the user terminal 20 determines a slot at the end of the COT include the following Examples 3-1, 3-2, and 3-3. Figures 12 to 14, as used below, are also commonly used in Examples 4 to 6.

### <Example 3-1>

In Example 3-1, when the user terminal 20 detects DCI FORMAT 2_0 with a specific aggregation level/search space, it determines that the last slot of slotFormats specified in the DCI Format 2_0 is the end of the COT.

A specific example will be described with reference to Fig. 3 and Fig. 12(3-1) . In Fig. 3, S101, slotFormatCombinations is configured to the user terminal 20.

In S102 of FIG. 3, for example, the user terminal 20 detects four DCI formats 2_0 (successful decoding in a normal aggregation level/search space) shown as A to D in FIGS. 12. The user terminal 20 determines that each slot of slotFormats specified in the four DCI formats 2_0 is within the COT.

After four times of DCI Format 2_0, the user terminal 20 detects DCI Format 2_0 with a specific aggregation level/search space. The slotFormats of the DCI format 2_0 is for example {0, 1, 1}, and the user terminal 20 determines that the last slot (third slot) is the last slot of the COT.

### <Example 3-2>

In Example 3-2, when the user terminal 20 detects DCI Format 2_0 with a specific aggregation level/search space, it determines that the last slot of slotFormats specified in the last DCI Format 2_0 (detected with a normal aggregation level/search space) before the DCI Format 2_0 is the end of the COT.

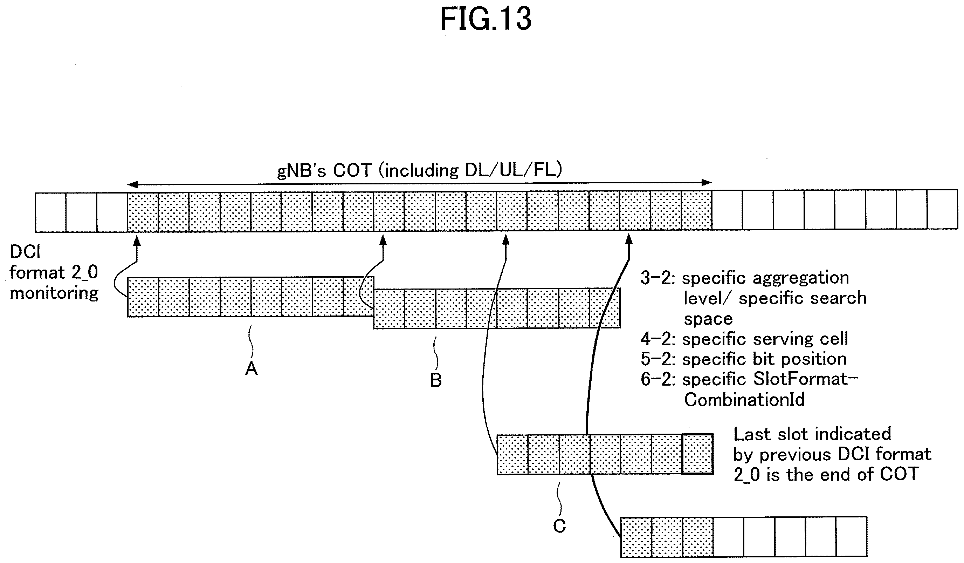

A specific example showing a difference from Example 3-1 will be described with reference to Fig. 13(3-2). The user terminal 20 detects three DCI formats 2_0 (successfully decoded in a normal aggregation level/search space) shown as A to C in FIG. 13. The user terminal 20 determines that each slot of slotFormats specified in the three DCI formats 2_0 is within the COT.

After three times of DCI Format 2_0, the user terminal 20 detects DCI Format 2_0 with a specific aggregation level/search space and determines that the last slot in the slotFormats specified in the last DCI Format 2_0 before the DCI Format 2_0 is the end of the COT.

### <Example 3-3>

Example 3-3 corresponds to the combination of Examples 1 and 3. In Example 3-3, when the user terminal 20 detects DCI Format 2_0 with a specific aggregation level/search space, if the format number in the last slot of slotFormats specified in the DCI Format 2_0 is the specific slot number described in Example 1, the user terminal 20 determines that the last slot is out of COT.

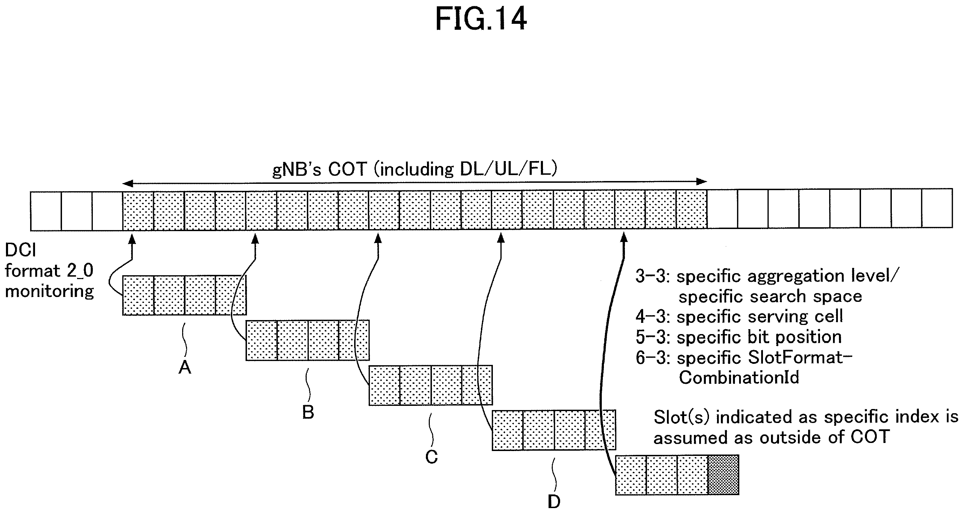

A specific example showing a difference from Example 3-1 will be described with reference to Fig. 14(3-3) . The user terminal 20 detects four DCI formats 2_0 (successfully decoded with a normal aggregation level/search space) shown as A to D in FIG. 14. The user terminal 20 determines that each slot of slotFormats specified in the four DCI formats 2_0 is within the COT.

After four times of DCI Format 2_0, the user terminal 20 detects DCI Format 2_0 with a specific aggregation level/search space to determine whether the format number of the last slot of the DCI Format 2_0 is a specific format number. If the format number of the last slot of the DCI Format 2_0 is a specific format number, the user terminal 20 determines that the last slot is out of the COT.

### (Example 4)

Example 4 will now be described. As described above, the base station apparatus 10 can notify the user terminal 20 of slotFormats for each serving cell by SlotFormatCombinationID located at the bit position of each serving cell in the DCI Format 2_0.

In Example 4, the base station apparatus 10 notifies whether the slot in slotFormats indicated by DCI format 2_0 is at the end of COT by a difference in serving cells.

More specifically, the user terminal 20 determines that the slot of slotFormats specified for a serving cell other than a specific serving cell by the DCI format 2_0 is within the COT of the base station apparatus 10.

The user terminal 20 determines that the slot is the end of the COT based on slotFormats specified for a specific serving cell by the DCI format 2_0.

The specific serving cell may be configured from the base station apparatus 10 to the user terminal 20 by an RRC message, or it may be configured from the base station apparatus 10 to the user terminal 20 by a signal other than an RRC message (e.g., MAC CE). Specific serving cells may also be pre-specified in the specification as fixed (e.g. SpCell) .

Examples of the method in which the user terminal 20 determines the slot at the end of the COT include the following Examples 4-1, 4-2, and 4-3. The serving cells in Examples 4-1, 4-2, and 4-3 may be NR-U serving cells. Also, a serving cell other than the specific serving cell is called a normal serving cell.

### <Example 4-1>

In Example 4-1, when the user terminal 20 detects that slotFormats is specified for a specific serving cell by the DCI Format 2_0, it determines that the last slot of the slotFormats specified in the DCI Format 2_0 is the end of the COT.

A specific example will be described with reference to Fig. 3 and Fig. 12(4-1). In Fig. 3, S101, the slotFormatCombinations or the like is configured to the user terminal 20.

In S102 of FIG. 3, for example, the user terminal 20 detects four DCI Formats 2_0 (specifying slotFormats in a normal serving cell) shown as A to D in FIGS. 12. The user terminal 20 determines that each slot of slotFormats specified in the four DCI formats 2_0 is within the COT.

After four DCI Format 2_0 calls, the user terminal 20 detects that slotFormats is specified for a particular serving cell by DCI Format 2_0. The slotFormats of the DCI format 2_0 are for example {0, 1, 1}, and the user terminal 20 determines that the last slot (third) is the last slot of the COT.

### <Example 4-2>

In Example 4-2, when the user terminal 20 detects that slotFormats is specified for a specific serving cell by the DCI Format 2_0, it determines that the last slot of slotFormats specified in the last DCI Format 2_0 (specifying slotFormats of a normal serving cell) before the DCI Format 2_0 is the end of the COT.

A specific example of the difference from Example 4-1 will be described with reference to Fig. 13(4-2). The user terminal 20 detects three DCI formats 2_0 (specifying slotFormats of a normal serving cell) shown as A to C in FIG. 13. The user terminal 20 determines that each slot of slotFormats specified in the three DCI formats 2_0 is within the COT.

After three times of DCI Format 2_0, when the user terminal 20 detects that slotFormats is specified for a specific serving cell by DCI Format 2_0, the user terminal 20 determines that the last slot in the slotFormats specified in the last DCI Format 2_0 before the DCI Format 2_0 is the end of the COT.

### <Example 4-3>

Example 4-3 corresponds to the combination of Examples 1 and 4. In Example 4-3, when the user terminal 20 detects that slotFormats is specified for a specific serving cell by the DCI Format 2_0, if the format number in the last slot of slotFormats specified in the DCI Format 2_0 is the specific slot number described in Example 1, the user terminal 20 determines that the last slot is out of COT.

A specific example of the difference from Example 4-1 will be described with reference to Fig. 14(4-3) . The user terminal 20 detects four DCI Formats 2_0 (specifying slotFormats of a normal serving cell) shown as A to D in Figs. 14. The user terminal 20 determines that each slot of slotFormats specified in the four DCI formats 2_0 is within the COT.

After four times of DCI Format 2_0, when the user terminal 20 detects by DCI Format 2_0 that slotFormats is specified for a specific serving cell, the user terminal 20 determines whether the format number of the last slot of the DCI Format 2_0 is a specific format number or not. If the format number of the last slot of the DCI Format 2_0 is a specific format number, the user terminal 20 determines that the last slot is out of the COT.

### (Example 5)

Next, Example 5 will be described. As described above, the base station apparatus 10 can notify the user terminal 20 of the slotFormats for each serving cell by SlotFormatCombinationID located at the bit position of each serving cell in the DCI Format 2_0. The location where SlotFormatCombinationID is stored in DCI Format 2_0 may be called SFI-index field.

In Example 5, by differences in the SFI-index field (bit position) in which the SlotFormatCombinationID is stored, the base station apparatus 10 notifies whether a slot in slotFormats indicated by DCI format 2_0 is the end of COT or not.

More specifically, when the user terminal 20 detects that the SlotFormatCombinationID is specified at a bit position other than a specific bit position ("a specific bit position" includes meaning of "specific bit range") by the DCI format 2_0, the user terminal 20 determines that the slot of slotFormats corresponding to the SlotFormatCombinationID is within the COT of the base station apparatus 10.

The user terminal 20 determines the end of the COT according to the detection that SlotFormatCombinationID is specified at a specific bit position by the DCI format 2_0.

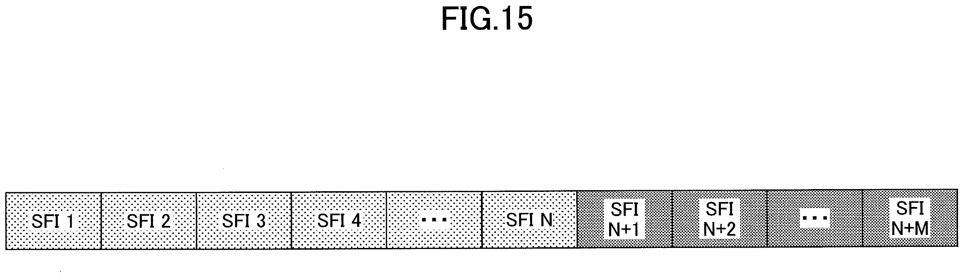

Fig. 15 shows an example of the SFI-index field in DCI format 2_0 of Example 5. In the example of Fig. 15, when the user terminal 20 detects that the SlotFormatCombinationID is stored in a bit position in the range represented by SFI-1 to SFI-N, the user terminal 20 recognizes that slotFormats of the SlotFormatCombinationID is executed by a corresponding serving cell (for example, serving cell 1 if SFI-1 is used), and determines that each slot of the slotFormats is within the COT.

When the user terminal 20 detects that the SlotFormatCombinationID is stored in a bit position in the range represented by SFI-N+1 to SFI-N+M, the user terminal 20 recognizes that slotFormats of the SlotFormatCombinationID have the meaning described in Examples 5-1 to 5-3, which will be described later.

Note that, when slotFormats of the serving cells 1 to N is specified by the normal bit positions 1 to N, the bit position of N+k is a specific bit position with the meaning described in Examples 5-1 to 5-3, and k which is a remainder (mod N) obtained by dividing N+k by N means the serving cell k, so the user terminal 20 may recognize that a specific bit position is specified for the serving cell k.

Examples of the method in which the user terminal 20 determines the slot at the end of the COT include the following Examples 5-1, 5-2, and 5-3. A bit position other than a specific bit position is called a normal bit position.

### <Example 5-1>

In Example 5-1, when the user terminal 20 detects that the SlotFormatCombinationID is specified at a specific bit position by the DCI format 2_0, the user terminal 20 determines that the last slot of the slotFormats specified at the specific bit position is the end of the COT.

A specific example will be described with reference to Fig. 3 and Fig. 12(5-1). In Fig. 3, S101, the slotFormatCombinations or the like is configured to the user terminal 20.

In S102 of Fig. 3, for example, the user terminal 20 detects four DCI Formats 2_0 (which designates slotFormats at a normal bit position) shown as A to D in Fig. 12. The user terminal 20 determines that each slot of slotFormats specified in the four DCI formats 2_0 is within the COT.

After four times of DCI Format 2_0, the user terminal 20 detects that slotFormats is specified at a specific bit position by DCI Format 2_0. The slotFormats is for example {0, 1, 1}, and the user terminal 20 determines that the last (third) slot is the last of the COT.

### <Example 5-2>

In Example 5-2, when the user terminal 20 detects that the SlotFormatCombinationID is specified at a specific bit position by the DCI Format 2_0, the user terminal 20 determines that the last slot of slotFormats specified in the last DCI Format 2_0 (specifying slotFormats at the normal bit position) before the DCI Format 2_0 is the end of the COT.

A specific example of the difference from Example 5-1 will be described with reference to Fig. 13(5-2) . The user terminal 20 detects three DCI formats 2_0 (specifying slotFormats at a normal bit position) represented by A to C in FIG. 13. The user terminal 20 determines that each slot of the slotFormats specified in the three DCI formats 2_0 is within the COT.

After three times of DCI Format 2_0, when the user terminal 20 detects by DCI Format 2_0 that SlotFormatCombinationID is specified at a specific bit position, the user terminal 20 determines that the last slot in slotFormats specified by the last DCI Format 2_0 before the DCI Format 2_0 is the end of the COT.

### <Example 5-3>

Examples 5-3 corresponds to the combination of Examples 1 and 5. In Examples 5-3, when the user terminal 20 detects that the SlotFormatCombinationID is specified at a specific bit position by the DCI Format 2_0, if the format number in the last slot of the slotFormats specified at the specific bit position is the specific slot number described in Example 1, the user terminal 20 determines that the last slot is out of COT.

A specific example of the difference from Example 5-1 will be described with reference to Fig. 14(5-3) . The user terminal 20 detects four DCI formats 2_0 (specifying slotFormats at a normal bit position) represented by A to D in FIG. 14. The user terminal 20 determines that each slot of slotFormats specified in the four DCI formats 2_0 is within the COT.

After four times of DCI Format 2_0, the user terminal 20 detects that slotFormats is specified at a specifc bit position by DCI Format 2_0 to determine whether the format number of the last slot of the slotFormats is a specifc format number. If the format number of the last slot of the slotFormats is a specific format number, the user terminal 20 determines that the last slot is out of COT.

### (Example 6)

Next, Example 6 will be described. As described above, the base station apparatus 10 can notify the user terminal 20 of slotFormats for each serving cell by SlotFormatCombinationID located at a bit position of each serving cell in the DCI Format 2_0. The location where SlotFormatCombinationID is stored in DCI Format 2_0 is called an SFI-index field.

In the Example 6, the base station apparatus 10 notifies whether or not a slot in slotFormats indicated by DCI format 2_0 is the end of COT by differences in a value of SlotFormatCombinationID stored in the SFI-index field in DCI format 2_0 (here referred to as "SFI-index field value") .

More specifically, when the user terminal 20 detects that a value of the SFI-index field located in a range other than a specific range (referred to as a normal range) is specified by the DCI format 2_0, it is determined that the slot of slotFormats pertaining to the specification is within the COT of the base station apparatus 10.

The user terminal 20 determines the end of the COT when it detects that a value of the SFI-index field within a specific range is specified by the DCI format 2_0. For example, whether the value is within the specific range can be identified by the MSB of the SlotFormatCombinationID.

For example, when a value in the range of 0 to 127 is designated as the SFI-index field value, the user terminal 20 determines that it is a value in the normal range, and when a value in the range of 128 to 255 is designated as the SFI-index field value, the user terminal 20 determines that it is a value in the specific range.

When a value in the range of 128 to 255 is specified, the user terminal 20 may determine that the remainder of the value divided by 128 is the value specifying slotFormats (that is, the SlotFormatCombinationID).

Examples of the method in which the user terminal 20 determines a slot at the end of the COT include the following Examples 6-1, 6-2, and 6-3.

### <Example 6-1>

In Example 6-1, when the user terminal 20 detects that a value of the SFI-index field is specified in a specific range by the DCI format 2_0, the user terminal 20 determines that the last slot of slotFormats specified by the SFI-index field value is the end of COT.

A specific example will be described with reference to Fig. 3 and Fig. 12(6-1). In Fig. 3, S101, the slotFormatCombinations or the like is configured to the user terminal 20.

In S102 of FIG. 3, for example, the user terminal 20 detects four DCI Formats 2_0 (which specify the value of the SFI-index field within the normal range) shown as A to D in FIG. 12. The user terminal 20 determines that each slot of slotFormats specified in the four DCI formats 2_0 is within the COT.

After four times of DCI Format 2_0, the user terminal 20 detects by DCI Format 2_0 that an SFI-index field value in the specific range is specified. The slotFormats specified by the SFI-index field value is for example {0, 1, 1}, and the user terminal 20 determines that the last (third) slot is the end of the COT.

### <Example 6-2>

In Examples 6-2, when the user terminal 20 detects that an SFI-index field value in the specified range is specified by the DCI Format 2_0, the user terminal 20 determines that the last slot of the slotFormats specified by the last DCI Format 2_0 (specifying an SFI-index field value in the normal range) before the DCI Format 2_0 is the end of the COT.

A specific example of the difference from Example 6-1 will be described with reference to Fig. 13(6-2). The user terminal 20 detects three DCI formats 2_0 (specifying the SFI-index field value in the normal range) represented by A to C of FIG. 13. The user terminal 20 determines that each slot of slotFormats specified in the three DCI formats 2_0 is within the COT.

After three times of DCI Format 2_0, when the user terminal 20 detects by DCI Format 2_0 that a value in the SFI-index field is specified in the specified range, the user terminal 20 determines that the last slot in slotFormats specified by the last DCI Format 2_0 before the DCI Format 2_0 is the end of COT.

### <Example 6-3>

Examples 6-3 corresponds to the combination of Examples 1 and 6. In Example 6-3, when the user terminal 20 detects that a value of the SFI-index field within a specific range is specified by the DCI format 2_0, if the format number in the last slot of the slotFormats specified by the SFI-index field value is the specific slot number described in Example 1, the user terminal 20 determines that the last slot is out of COT.

A specific example of the difference from Example 6-1 will be described with reference to Fig. 14(6-3). The user terminal 20 detects four DCI formats 2_0 (specifying the SFI-index field values in the normal range) represented by A to D of FIG. 14. The user terminal 20 determines that each slot of slotFormats specified in the four DCI formats 2_0 is within the COT.

After four times of DCI Format 2_0, when the user terminal 20 detects by DCI Format 2_0 that an SFI-index field value in the specific range is specified, the user terminal 20 determines whether the format number of the last slot of slotFormats specified by the SFI-index field value is a specific format number. If the format number of the last slot of the slotFormats is a specific format number, the user terminal 20 determines that the last slot is out of COT.

### (Example 7)

Example 7 will now be described. Example 7 can be applied to any of Examples 1-6, 8, 9, 10.

In Example 7, by a DCI Format 2_0, one or more blocks identified by the following block numbers are transmitted, in place of or in addition to the SFI-index field. In other words, the DCI Format 2_0 contains one or more blocks identified by the following block numbers.

### - Block number 1, block number 2, .. Block number N

The start bit position of each block is notified from the base station apparatus 10 to the user terminal 20 by, for example, an RRC message (for example, positioninDCI). The bit position of each block corresponds, for example, to a serving cell. However, the bit position of each block may be unrelated to the serving cell.

The content of each block is notified from the base station apparatus 10 to the user terminal 20 by a higher layer signaling method such as RRC. Each block includes, for example, the following information. Not all of the following information is required. Either one of the following may be included.
- SlotFormatIndicator (may be the same as or modified from the SlotFormatIndicator disclosed in Non-Patent Document 1);
- COT-related information (e.g., information indicating whether inside or outside of COT, information indicating the timing of end of COT/remaining time of the COT, etc.);
- Subband information.

The sub-band (LBT bandwidth) information includes, for example, information indicating the frequency width of each of one or more sub-bands and IDs corresponding to respective sub-bands. For example, in the base station apparatus 10, when LBT of a subband is OK and a COT of the subband is acquired, the base station apparatus 10 transmits a DCI Format 2_0 (for example, the DCI Format 2_0 of any of Examples 1 to 6) containing the ID representing the subband to the user terminal 20. Thus, the user terminal 20 can determine whether or not a slot is within the COT in sub-band units.

The information of the sub-band may be a bit map indicating OK/NG of LBT for each sub-band. For example, suppose that the bandwidth of an active BWP is 100 MHz and the bandwidth unit of the sub-band in which the base station apparatus 10 performs LBT is 20 MHz. Assuming that subband 1, subband 2, subband 3, subband 4, and subband 5 are arranged every 20 MHz from the low-frequency side to the 100 MHz. In this case, for example, if the bit map is (0, 0, 1, 1, 1), this indicates that the LBT of the subband 1 is NG, the LBT of the subband 2 is NG, the LBT of the subband 3 is OK, the LBT of the subband 4 is OK, and the LBT of the subband 5 is OK.

The LBT result shown in the bit map above is valid for the length (number of slots) of slotFormats indicated by the SFI-index value notified by DCI Format 2_0, for example.

### (Example 8)

Example 8 will now be described. Example 8 can be applied to any of Examples 1-7, 9, and 10.

There are two types of LBTs: FBE (frame-based equipment) and LBE (load-based equipment).

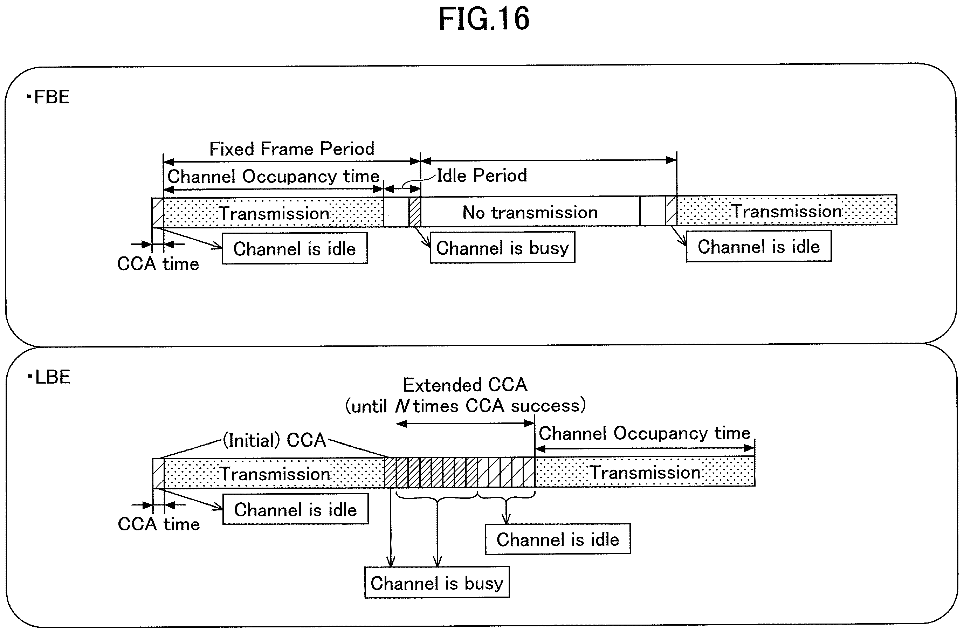

As illustrated as "FBE" in FIG. 16, in the FBE, LBT is executed at a fixed timing (period). In FBE, COT start timing, COT end timing, and COT time length are always fixed.

Also, as illustrated as "LBE" in FIG. 16, LBT is performed at any time in the LBE. That is, in LBE, both COT start timing, COT end timing, and COT time length can change over time.

When the FBE is executed as the LBT of the base station apparatus 10, since the COT start timing, COT end timing, and COT time length of the COT are fixed, notification of the CO time domain structure as described in Examples 1-6 may not be performed. If the LBE is executed as the LBT of the base station apparatus 10, a notification of the CO time domain structure as described in Examples 1-6 is performed.

Accordingly, in the Example 8, when the base station apparatus 10 performs the FBE, the base station apparatus 10 notifies the user terminal 20 of the CO time domain structure (e.g., COT start timing, COT end timing, and COT time length) by upper layer signaling (SIB or RRC, or SIB and RRC). In this case, assuming that the dynamic CO time domain structure as described in Examples 1 to 6 is not notified, the user terminal 20 can use the CO time domain structure notified in the upper layer signaling to determine whether a slot is within the COT. The base station apparatus 10 may notify the user terminal 20 of the start timing, execution period, and time length of the LBT instead of the CO time domain structure. If the dynamic CO time domain structure is not notified, the CO frequency domain structure described in Example 10 may be notified.

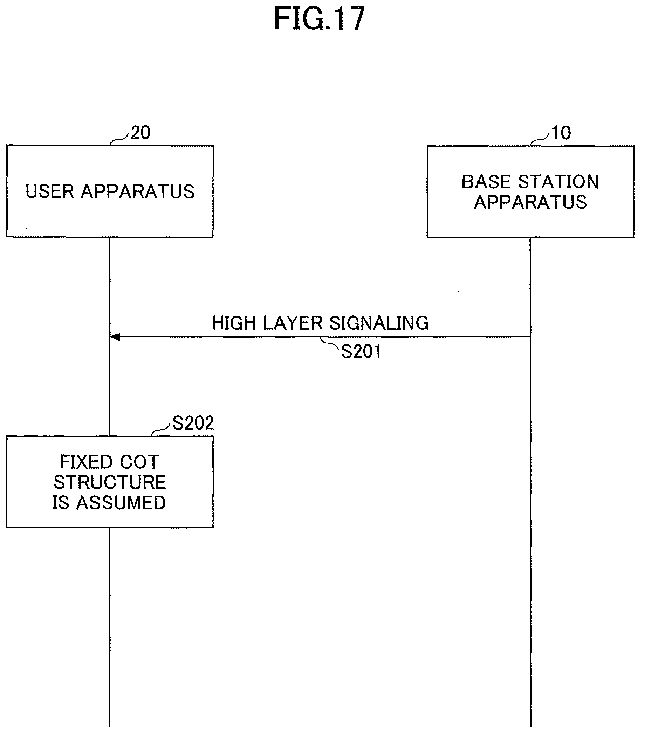

An example of the above-described operation is shown in Fig. 17. In S201 of Fig. 17, the user terminal 20 receives the CO time domain structure from the base station apparatus 10 by upper layer signaling. In S202, the user terminal 20 determines whether a slot is inside or outside of the COT assuming a fixed CO time domain structure.

The user terminal 20 may determine that the FBE operation is performed in the base station apparatus 10 when the above-described configuration is performed, and may determine that the LBE operation is performed in the base station apparatus 10 when the above-described configuration is not performed.

The base station apparatus 10 may explicitly notify the user terminal 20 of the LBT type (FBE or LBE) by upper layer signaling (SIB or RRC or SIB and RRC).

According to the Example 8, efficient operation according to the LBT type is enabled.

### (Example 9)

Example 9 will now be described. Example 9 can be applied to any of Examples 1-8, 10.

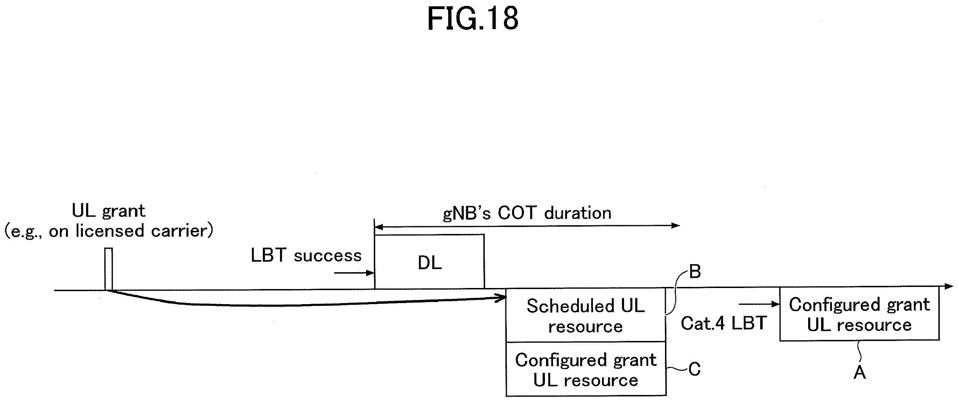

As shown in FIG. 18, UL resources scheduled by UL grant before executing LBT or UL resources by configurated grant may enter the COT newly acquired by base station apparatus 10.

As shown at A of FIG. 18, the user terminal 20 performs UL transmission by performing LBT of category 4 according to a preset configuration, for example, when the slot is outside of the COT. If the UL transmission is scheduled within the COT, LBT may not be performed.

However, when it is specified to perform a category 4 LBT at the time of scheduling/configuration of UL resources shown in B and C, it is unclear whether the user terminal 20 is allowed to perform a simplified LBT (category 1, 2, etc.) since it is inside the COT or whether category 4 should be performed.

Accordingly, in Example 8, LBT information of UL is included in the DCI Format 2_0 (for example, the DCI Format 2_0 notified in the DL of Fig. 18) described so far. The LBT information may be included in the block described in Example 7.

The LBT information may be of the type of LBT to be performed for UL transmission or of a gap time length to switch from DL to UL transmission (the gap time length may be a gap time length from UL transmission to another UL transmission). The user terminal 20 can determine the LBT to be performed based on the gap time length.

Further, the type (or the gap time length) of the LBT to be performed for the UL transmission, such as B and C shown in Fig. 18, may be notified from the base station apparatus 10 to the user terminal 20 by the upper layer signaling (SIB or RRC). In this case, the user terminal 20 can execute the LBT appropriately without notifying the dynamic LBT information by the DCI format 2_0.

### (Example 10)

Example 10 will now be described. In Example 10, in DCI Format 2_0 notifying the user terminal 20 of the CO time domain structure described in Examples 1 to 9, information indicating a CO frequency domain structure is included in addition to information indicating the CO time domain structure.

However, the inclusion of information indicating the CO frequency domain structure in the DCI Format 2_0 in addition to information indicating the CO time domain structure is an example, and information indicating the CO frequency domain structure may be included in the DCI Format 2_0 without information indicating the CO time domain structure.

Also, the embodiment in which DCI Format 2_0 is used as a DCI including the information of the CO frequency domain structure is an example. The DCI in which information representing the CO frequency domain structure is included may be a DCI other than DCI Format 2_0. Further, information representing the CO frequency domain structure may be notified from the base station apparatus 10 to the user terminal 20 by a signal other than DCI.

In Example 10, the information representing the CO frequency domain structure is a bitmap. However, it is an example that the information representing the CO frequency domain structure is a bitmap. Information indicating the CO frequency domain structure in a format other than a bitmap may be notified to the user terminal 20.

Regarding the information representing the CO frequency domain structure, the information itself (e.g., the bitmap itself) may be notified by DCI Format 2_0. Similarly to the SFI-index (slotFormatCombinationId), one or more information may be configured to the user terminal 20 by an RRC message (S101 in Fig. 3), and specific information may be notified by the DCI Format 2_0 (S102 in Fig. 3) by an ID.

The bitmap representing the CO frequency domain structure in Example 10 may be similar to the bitmap described in Example 7, for example. The bitmap may also be included in the block described in Example 7.

That is, for example, suppose that the bandwidth of the active BWP is 100 MHz, and the bandwidth unit of the subband in which the base station apparatus 10 performs LBT is 20 MHz. Assuming that subband 1, subband 2, subband 3, subband 4, and subband 5 are arranged every 20 MHz from the low-frequency side to the high-frequency side within 100 MHz. In this case, for example, if the bitmap is (0, 0, 1, 1, 1), this indicates that the LBT of the subband 1 is NG, the LBT of the subband 2 is NG, the LBT of the subband 3 is OK, the LBT of the subband 4 is OK, and the LBT of the subband 5 is OK.

The monitoring interval of PDCCH may be less than the time length of slotFormats (SlotFormatCombination), for example, as shown in B and C in Fig.10. At this time, for each slot within the time indicated by D, for example, slot formats are indicated by two DCI formats 2_0.

In response to this situation, Non-Patent Document 2 states that " the UE expects each of the more than one DCI formats 2_0 to indicate a same format for the slot." That is, in accordance with the provisions of Non-Patent Document 2, the user terminal 20 operates assuming that each of the plurality of DCI formats 2_0 designates the same format for the slot.

However, there is no provision regarding the case where the user terminal 20 receives information (bitmap) representing the CO frequency domain structure with multiple DCI formats 2_0 for a slot, and the operation of the user terminal 20 in this case needs to be clarified. If the definition is not achieved, the user terminal 20 may not be able to determine the assumption and may operate inappropriately.

Hereinafter, examples 10-1, 10-2, and 10-3 will be described as operation examples for solving the above-described problems.

The DCI Format 2_0 is used as the DCI in the following operation example description. A mechanism for notifying the CO time domain structure as described in Example 3, for example, is also applied. Any mechanism may be used to inform the CO time domain structure.

In the following description, the statement that the CO frequency domain structure (bitmap) is transmitted by DCI Format 2_0 may mean that the bitmap itself is included in the DCI Format 2_0, or that DCI Format 2_0 including the bitmap ID is transmitted. In the latter case, it is assumed that corresponding information between the ID and the bitmap is configured to the user terminal 20 in RRC signaling or in a pre-configuration. Hereinafter, although GC-PDCCH is used to transmit DCI Format 2_0, PDCCH other than GC-PDCCH (e.g., PDCCH addressed to user terminal 20) may be used.

### <Example 10-1>

First, Example 10-1 will be described. In the example 10-1, when the CO frequency domain structure (bitmap) is notified to the user terminal 20 by a plurality of DCI formats 2_0 within the same COT from the base station apparatus 10, the user terminal 20 assumes that the same CO frequency domain structure is notified to the user terminal 20 by each of the plurality of DCI formats 2_0.

However, by a GC-PDCCH at the head of the COT, a specific bitmap (e.g., all bit values are 0) may be notified. The reason is that, in the GC-PDCCH at the beginning of the COT, the LBT result may not be reflected in the base station apparatus 10 in time. The same is true for Examples 10-2 and 10-3 in that a specific bitmap (e.g., all bit values are 0) may be notified by aa GC-PDCCH at the head of the COT.

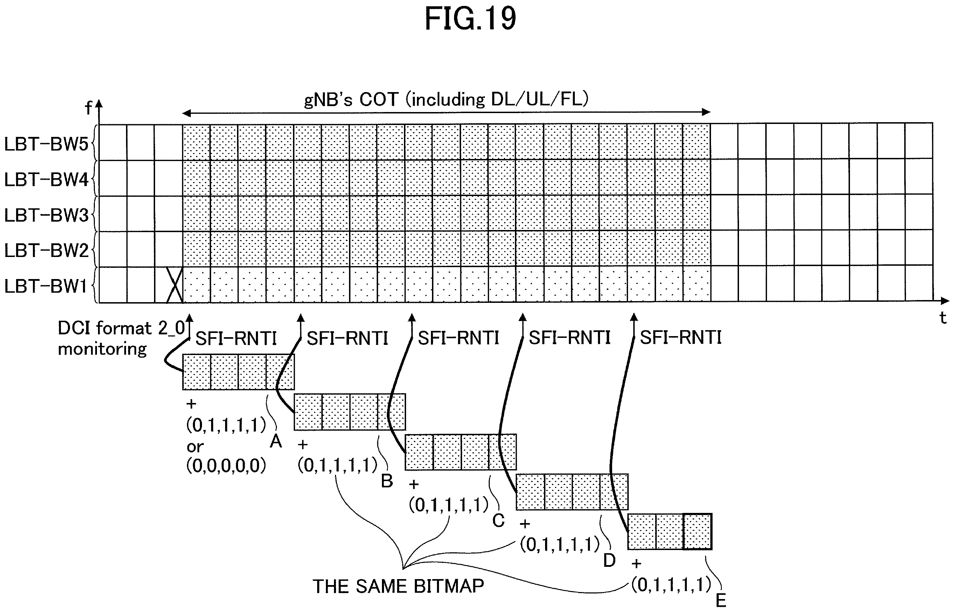

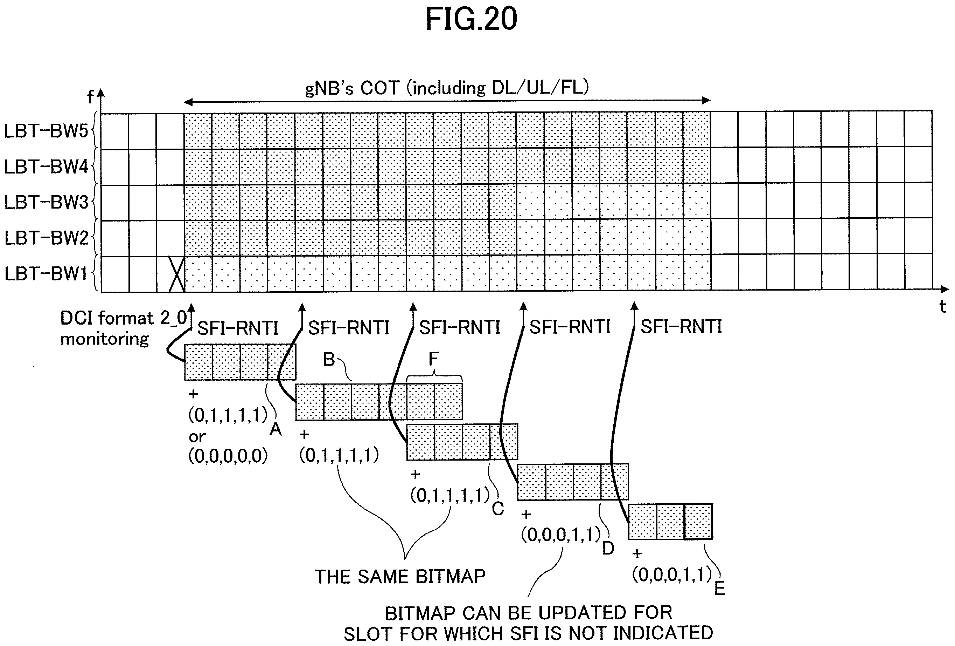

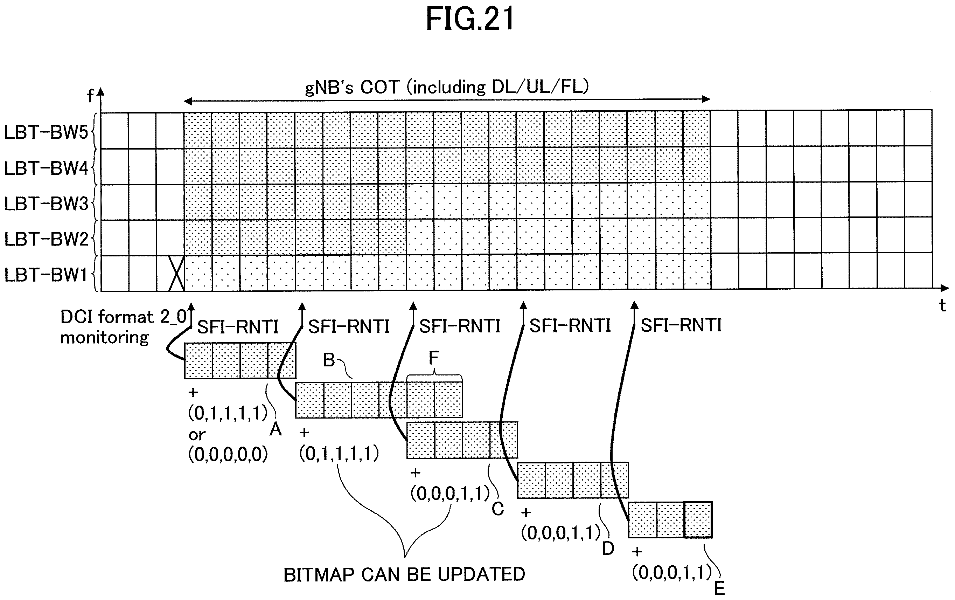

An operation example of Example 10-1 will be described with reference to Fig. 19. FIG. 19 (also in FIGS. 20 and 21) assumes, for example, that the active BWP has a bandwidth of 100 MHz and that the LBT is executed in the base station apparatus 10 at each of the five LBT bandwidths (20 MHz) as shown in the figure.

The user terminal 20 uses the SFI-RNTI to monitor the DCI format 2_0 transmitted from the base station apparatus 10.

When the user terminal 20 receives the DCI format 2_0 indicating slotformats (representing a format equivalent to four slots from the first slot of the COT) represented by A at the head portion of the first slot, the user terminal 20 determines that slots from the first slot of the slotFormats become within a COT.

This DCI format 2_0 also notifies a bitmap indicating a CO frequency domain structure. The bitmap (0, 1, 1, 1, 1) shown in the figure indicates (LBT=NG in LBT-BW1, LBT=OK in LBT-BW2, LBT=OK in LBT-BW3, LBT=OK in LBT-BW4, and LBT=OK in LBT-BW5).

The user terminal 20 that received the bitmap (0, 1, 1, 1, 1) determines that, in the period of the length (4 slots) of slotFormats shown in A, (0, 1, 1, 1, 1) is applied, and assumes that the CO frequency domain structure notified by DCI format 2_0 (notifying slotFormats B to E) subsequently received in the COT is the same as the CO frequency domain structure notified by DCI format 2_0 that notified slotFormats shown in A. It should be noted that "assuming" may be replaced with "determining" in this specification.

In the example of FIG. 19, all CO frequency domain structures notified by DCI format 2_0 which notifies slotFormats B to E are (0, 1, 1, 1, 1).

In response to the "assumptions" described above, the base station apparatus 10 will subsequently transmit the same CO frequency domain structure as the first transmitted CO frequency domain structure in the COT. However, the operation of the base station apparatus 10 is not limited to such an operation.

With regard to operation on the above-described "assuming", for example, when the user terminal 20 first receives a CO frequency domain structure (0, 1, 1, 1, 1) within the COT, the user terminal 20 may determine that the CO frequency domain structure received thereafter is the same as the first (0, 1, 1, 1, 1) without reading from the DCI Format 2_0, and the user terminal 20 may also determine that an error has occurred unless the CO frequency domain structure read from DCI Format 2_0 received thereafter is the same as the first (0, 1, 1, 1, 1).

The user terminal 20 which receives (0, 1, 1, 1, 1) as the CO frequency domain structure monitors PDCCH in the bands of LBT-BW2 to LBT-BW5, for example.

As noted above, the base station apparatus 10 may notify a specific bitmap in a PDCCH at the beginning of the COT. Fig. 19 shows (0, 0, 0, 0, 0) as an example of the specific bitmap. The user terminal 20 which receives the specific bitmap monitors PDCCH in all bands of LBT-BW1 through LBT-BW5. When a specific bitmap is notified, the CO frequency domain structure received after that by the user terminal 20 becomes the first CO frequency domain structure described above ((0, 1, 1, 1, 1), in the example of Fig. 19, received next to (0, 0, 0, 0, 0)) and the user terminal 20 assumes that the CO frequency domain structure subsequently received (in the example of Fig. 19, the CO frequency domain structure notified with C to E) is the same as the first CO frequency domain structure.

The user terminal 20 determines the end of the COT by the slotFormats indicated by E.

In Example 10-1, the user terminal 20 can assume that the same CO frequency domain structure is notified by multiple DCI formats 2_0 within the COT, thereby reducing the processing load.

### <Example 10-2>

Next, Example 10-2 will be described. In Example 10-2, when a format is notified by another DCI Format 2_0 (for convenience, referred to as second DCI; the second DCI may be more than one DCIs) for any one or more slots (referred to as overlapping notification slots) of one or more slots of slotFormats notified by a DCI Format 2_0 (referred to as first DCI for convenience), the user terminal 20 assumes that the same CO frequency domain structure as the CO frequency domain structure notified in the first DCI is notified in the second DCI.

An operation example of Example 10-2 will be described with reference to Fig. 20. The user terminal 20 uses the SFI-RNTI to monitor the DCI format 2_0 transmitted from the base station apparatus 10.

When the user terminal 20 receives the DCI format 2_0 indicating slotformats (representing a format of four slots from the first slot of the COT) represented by A at the head portion of the first slot, the user terminal 20 determines that slots from the first slot of the slotFormats become within the COT.

Subsequently, the user terminal 20 receives the DCI format 2_0 indicating slotformats indicated by B. Next, the user terminal 20 receives the DCI format 2_0 indicating slotformats indicated by C.

Since the CO frequency domain structure (0, 1, 1, 1, 1) has been notified by the DCI format 2_0 indicating slotFormats indicated by B, the user terminal 20 determines that (0, 1, 1, 1, 1) is applied as the CO frequency domain structure during the slot length of slotFormats indicated by B.

As shown in Fig. 20, six slots of slotFormats indicated by B and four slots of slotFormats indicated by C overlap each other with two slots indicated by F. That is, for the two slots represented by F, the user terminal 20 is notified of the CO frequency domain structure by the DCI format 2_0 (denoted as the first DCI) notifying the slotFormats represented by B, and is notified of the CO frequency domain structure by the DCI format 2_0 (denoted as the second DCI) notifying the slotFormats represented by C.

In Example 10-2, the user terminal 20 assumes that the CO frequency domain structure notified by the second DCI is the same as the CO frequency domain structure notified by the first DCI.

In response to the above-described "assuming," the base station apparatus 10 notifies the same CO frequency domain structure, by the second DCI, as the CO frequency domain structure notified by the first DCI. However, the operation of the base station apparatus 10 is not limited to such an operation.

With regard to the above-described "assuming" operation, for example, when the user terminal 20 receives the CO frequency domain structure (0, 1, 1, 1, 1) in the first DCI, the user terminal 20 may determine that the same (0, 1, 1, 1, 1) as the first DCI has been notified without reading the CO frequency domain structure from the second DCI, or the user terminal 20 read the CO frequency domain structure from the second DCI and the user terminal 20 may determine that an error has occurred unless the read CO frequency domain structure is the same as that of the first DCI (0, 1, 1, 1, 1).

In the example of Fig. 20, the user terminal 20 receives the DCI format 2_0 (referred to as the third DCI) that notifies slotFormats indicated by D at the beginning of the next slot of the last slot of slotFormats indicated by C. Since no format notification is made by other DCI format 2_0 at any slot in slotFormats shown in D, the user terminal 20 determines that a CO frequency domain structure different from the previously received CO frequency domain structure notified by DCI format 2_0 may be notified by the third DCI, reads the CO frequency domain structure of the third DCI, and applies the CO frequency domain structure.

In the example of FIG. 20, since (0, 0, 0, 1, 1) is notified by the third DCI, the user terminal 20 monitors the PDCCH in the bands of LBT-BW4 to LBT-BW5 during the slot length of slotFormats indicated by D.

The user terminal 20 determines the end of the COT by the slotFormats indicated by E.

In Example 10-2, when the CO frequency domain structure for the same slot is notified by multiple DCI formats 2_0 within the COT, the user terminal 20 can assume that the same CO frequency domain structure is notified, thereby reducing the processing load.

### <Example 10-3>

Next, Example 10-3 will be described. In Example 10-3, when a format is notified by another DCI Format 2_0 (for convenience, referred to as second DCI; the second DCI may be more than one DCIs) for any one or more slots (referred to as overlapping notification slots) of one or more slots of slotFormats notified by a DCI Format 2_0 (referred to as first DCI for convenience) within a COT, the user terminal 20 applies the CO frequency domain structure notified by the second DCI for the overlapping notification slots. The user terminal 20 applies the CO frequency domain structure notified by the last (most recent) second DCI if there are more than one second DCIs. That is, the user terminal 20 applies the CO frequency domain structure notified by the last (most recent) DCI format 2_0 to the overlapping notification slots.

An operation example of the Example 10-3 will be described with reference to Fig. 21. The user terminal 20 uses the SFI-RNTI to monitor the DCI format 2_0 transmitted from the base station apparatus 10.

When the user terminal 20 receives the DCI format 2_0 indicating slotformats (representing a format equivalent to four slots from the first slot of the COT) represented by A at the head portion of the first slot, the user terminal 20 determines that slots from the first slot of the slotFormats becomes within the COT.

Subsequently, the user terminal 20 receives the DCI format 2_0 indicating slotformats indicated by B. Next, the user terminal 20 receives the DCI format 2_0 indicating slotformats indicated by C.

Since the CO frequency domain structure (0, 1, 1, 1, 1) has been notified by the DCI format 2_0 indicating slotFormats indicated by B, the user terminal 20 determines that (0, 1, 1, 1, 1) is applied as the CO frequency domain structure during the slot length of slotFormats indicated by B at the time when the DCI format 2_0 is received. However, as described below, in Example 10-3, this determination is changed in the middle, and the CO frequency domain structure notified by DCI format 2_0 indicating slotFormats indicated by C is applied in the two slots indicated by F.

That is, as shown in Fig. 21, six slots of slotFormats represented by B and four slots of slotFormats represented by C overlap each other with two slots represented by F. For the two slots represented by F, the user terminal 20 is notified of the CO frequency domain structure by the DCI format 2_0 (designated as the first DCI) notifying slotFormats represented by B, and is notified of the CO frequency domain structure by the DCI format 2_0 (designated as the second DCI) notifying slotFormats represented by C.

In the example 10-3, the user terminal 20 applies the CO frequency domain structure notified by the second DCI to two slots represented by F out of six slots of slotFormats represented by B.

Thereafter, the user terminal 20 applies the CO frequency domain structure notified by DCI format 2 which notifies the format in each slot.

The user terminal 20 determines the end of the COT by the slotFormats indicated by E.

In Example 10-3, when the CO frequency domain structure for the same slot is notified by multiple DCI Formats 2_0 within the COT, the user terminal 20 applies the CO frequency domain structure notified by the latest DCI Format 2_0, allowing flexible control.

As described above, according to the Example 10 described in Examples 10-1 to 10-3, assumption by the user terminal 20 of how to notify the user terminal 20 of the CO frequency domain structure in the NR-U wideband operation is clarified, so that the user terminal 20 can interpret the notification appropriately.

### (Equipment configuration)

Next, a functional configuration example of the base station apparatus 10 and the user terminal 20 that perform the processing and operations described above will be described. The base station apparatus 10 and the user terminal 20 include functions for implementing the above-described Examples 1 to 10. However, each of the base station apparatus 10 and the user terminal 20 may include only some of the functions of the Examples 1 to 10.

### <Base Station apparatus 10>

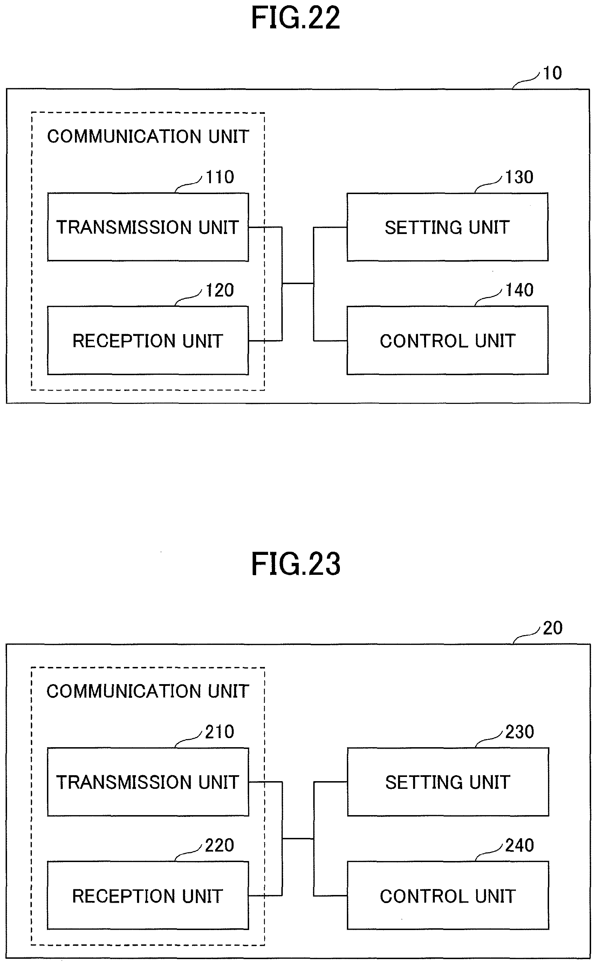

Fig. 22 is a diagram illustrating an example of a functional configuration of the base station apparatus 10. As shown in Fig. 22, the base station apparatus 10 includes a transmission unit 110, a reception unit 120, a setting unit 130, and a control unit 140. The functional configuration shown in Fig. 22 is only one example. If the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The reception unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The setting unit 130 stores the pre-configured configuration information and various configuration information to be transmitted to the user terminal 20 in the storage device provided by the setting unit 130 and reads the configuration information from the storage device as necessary.

The control unit 140 schedules the DL reception or UL transmission of the user terminal 20 through the transmission unit 110. A function unit related to signal transmission in the control unit 140 may be included in the transmission unit 110, and a function unit related to signal reception in the control unit 140 may be included in the receiving unit 120. The transmission unit 110 may be called a transmitter, and the reception unit 120 may be called a receiver.

### <User terminal 20>

Fig. 23 is a diagram illustrating an example of the functional configuration of the user terminal 20. As shown in Fig. 23, the user terminal 20 includes a transmission unit 210, a reception unit 220, a setting unit 230, and a control unit 240. The functional configuration shown in FIG. 20 is only one example. If the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The reception unit 220 receives various signals wirelessly and acquires signals from higher layers from the received signal of the physical layer. The receiving unit 220 has a function to receive the NR-PSS, NR-SSS, NR-PBCH, and DL/UL/SL control signals transmitted from the base station apparatus 10, the DCI by the PDCCH, data by the PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the reception unit 120 may receive PSCCH, PSSCCH, PSDCH, PSDCH, or PSBCH, etc. from another user terminal 20.

The setting unit 230 stores various configuration information received from the base station apparatus 10 or the user terminal 20 by the reception unit 220 in the storage device provided by the setting unit 230 and reads it from the storage device as necessary. The setting unit 230 also stores the preconfigured configuration information.

The control unit 240 performs control of the user terminal 20. A function unit related to signal transmission in the control unit 240 may be included in the transmission unit 210, and a function unit related to signal reception in the control unit 240 may be included in the receiving unit 220. The transmission unit 210 may be referred to as a transmitter, and the reception unit 220 may be referred to as a receiver.

### [Summary]

According to the present embodiment, at least terminals and a reception method shown in the following items 1 to 5 are provided.

### (Item 1)

A terminal including:
a reception unit 220 configured to receive a plurality of pieces of control information indicating a channel occupancy structure of a frequency domain within a channel occupancy time; and
a control unit 240 configured to determine that the channel occupancy structure of the frequency domain indicated by each of the plurality of pieces of control information is the same.

### (Item 2)

A terminal including:
a reception unit 220 configured to receive a plurality of pieces of control information indicating a channel occupancy structure of a frequency domain for a same slot within a channel occupancy time; and
a control unit 240 configured to determine that the channel occupancy structure of the frequency domain indicated for the same slot by each of the plurality of pieces of control information is the same.

### (Item 3)

A terminal including:
a reception unit 220 configured to receive a plurality of pieces of control information indicating a channel occupancy structure of a frequency domain for a same slot within a channel occupancy time; and
a control unit 240 configured to determine that a channel occupancy structure of the frequency domain indicated by a newest control information of the plurality of pieces of control information is applied to the same slot.

### (Item 4)

The terminal according to any one of items 1 to 3, wherein the reception unit receives specific information in a first slot of the channel occupancy time.

### (Item 5)

A reception method executed by a terminal, including:
receiving a plurality of pieces of control information indicating a channel occupancy structure of a frequency domain within a channel occupancy time; and
determining that the channel occupancy structure of the frequency domain indicated by each of the plurality of pieces of control information is the same.

Any of the configurations described in items 1 to 5 provides a technique that allows the user terminal to receive the CO frequency domain structure properly from the base station apparatus.

### <Hardware configuration>

The block diagrams (FIGs. 22 and 23) used for explaining the above embodiment illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

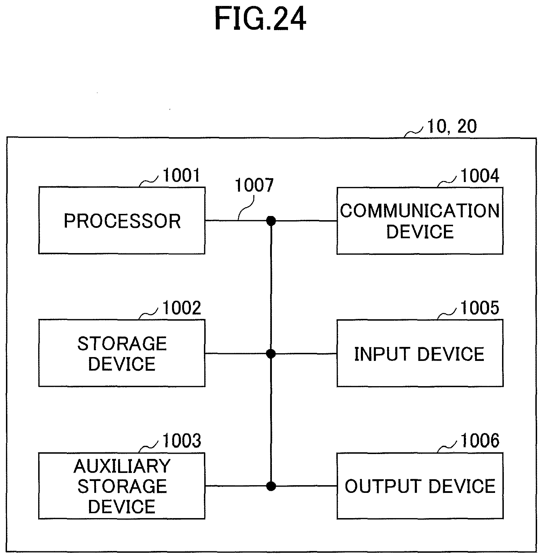

For example, the base station apparatus 10, the user terminal 20, and the like according to one embodiment of the present disclosure may function as a computer that performs processing of a wireless communication according to the present disclosure. FIG. 24 is a drawing illustrating an example of a hardware configuration of the base station apparatus 10 or the user terminal 20 according to an embodiment of the present disclosure. Each of the base station apparatus 10 and user terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user terminal 20 may be configured to include one or more of the devices illustrated in drawings, or may be configured not to include some of the devices.

Each function of the base station apparatus 10 and the user terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station apparatus 10, as illustrated in FIG. 22, may be implemented by a control program that is stored in the storage device 1002 and that is executed by the processor 1001. Also, for example, the control unit 240 of the user terminal 20, as illustrated in FIG. 23, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The auxiliary storage device 1003 may be referred to as an auxiliary storage device. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises) . The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises . For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user terminal 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUSCH, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors) . In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type) . It is noted that at least one of a base station and a mobile station includes an apparatus that does not necessarily move during a communication operation. For example, at least one of a base station and a mobile station may be an IoT (Internet of Thing) device such as a sensor.

In addition, a base station apparatus according to the present disclosure may be read as a user terminal. For example, each aspect or embodiment of the present disclosure may be applied to a configuration in which communication between a base station apparatus and a user terminal is replaced by communication between a plurality of user terminals 20 (that may be called D2D (Device-to-Device), V2X (Vehicle-to-Everything), or the like) . In this case, a user terminal 20 may have above-described functions of the base station apparatus 10. In this regard, a word such as "up" or "down" may be read as a word corresponding to communication between terminals (for example, "side") . For example, an uplink channel, a downlink channel, or the like may be read as a side channel.

Similarly, a user terminal according to the present disclosure may be replaced with a base station apparatus. In this case, a base station apparatus may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal) . A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames . Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like. Also, one slot may be referred to as unit time. The unit time may be different for each cell according to the numerology.

A TTI means, for example, a minimum time unit of scheduling in radio communication. For example, in an LTE system, a base station performs scheduling for each user terminal 20 to assign, in TTI units, radio resources (such as frequency bandwidths, transmission power, and the like that can be used by each user terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the transmission unit 210 and the reception unit 220 are examples of communication units . The transmission unit 110 and the reception unit 120 are examples of communication units. UECpability Enquiry is an example of a first RRC message that queries the capabilities of a user terminal. UECpability Information is an example of a second RRC message reporting UE capabilities.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### [Description of Symbols]

- 10: Base station apparatus
- 110: Transmission unit
- 120: Reception unit
- 130: Setting unit
- 140: Control unit
- 20: User terminal
- 210: Transmission unit
- 220: Reception unit
- 230: Setting unit
- 240: Control unit
- 1001: Processor
- 1002: Storage memory
- 1003: Auxiliary store
- 1004: Communication device
- 1005: Input device
- 1006: Output device

## Claims

1. A terminal comprising:
a reception unit configured to receive a plurality of pieces of control information indicating a channel occupancy structure of a frequency domain within a channel occupancy time; and
a control unit configured to determine that the channel occupancy structure of the frequency domain indicated by each of the plurality of pieces of control information is the same.

2. A terminal comprising:
a reception unit configured to receive a plurality of pieces of control information indicating a channel occupancy structure of a frequency domain for a same slot within a channel occupancy time; and
a control unit configured to determine that the channel occupancy structure of the frequency domain indicated for the same slot by each of the plurality of pieces of control information is the same.

3. A terminal comprising:
a reception unit configured to receive a plurality of pieces of control information indicating a channel occupancy structure of a frequency domain for a same slot within a channel occupancy time; and
a control unit configured to determine that a channel occupancy structure of the frequency domain indicated by a newest control information of the plurality of pieces of control information is applied to the same slot.

4. The terminal according to any one of claims 1 to 3, wherein the reception unit receives specific information in a first slot of the channel occupancy time.

5. A reception method executed by a terminal, comprising:
receiving a plurality of pieces of control information indicating a channel occupancy structure of a frequency domain within a channel occupancy time; and
determining that the channel occupancy structure of the frequency domain indicated by each of the plurality of pieces of control information is the same.
